(19) Europäisches Patentamt
European Patent Office
Office européen des brevets

(11) EP 3 880 949 B1

(12) FASCICULE DE BREVET EUROPEEN

(45) Date de publication et mention de la délivrance du brevet:
**02.07.2025 Bulletin 2025/27**

(21) Numéro de dépôt: **19831778.6**

(22) Date de dépôt: **12.11.2019**

(51) Classification Internationale des Brevets (IPC):
***F02C 9/26*** *(2006.01)* ***F02C 9/28*** *(2006.01)*
***F02C 9/46*** *(2006.01)*

(52) Classification Coopérative des Brevets (CPC):
**F02C 9/28; F02C 9/263; F02C 9/46;**
F05D 2270/021; F05D 2270/3032; F05D 2270/304;
Y02T 50/60

(86) Numéro de dépôt international:
**PCT/FR2019/052691**

(87) Numéro de publication internationale:
**WO 2020/099779 (22.05.2020 Gazette 2020/21)**

# (54) UNITE DE DOSAGE DE CARBURANT POUR UN MOTEUR D'AERONEF

KRAFTSTOFFMESSEINHEIT FÜR EINEN FLUGZEUGMOTOR

FUEL METERING UNIT FOR AN AIRCRAFT ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2018 FR 1871506**

(43) Date de publication de la demande:
**22.09.2021 Bulletin 2021/38**

(73) Titulaire: **SAFRAN AIRCRAFT ENGINES**
**75015 Paris (FR)**

(72) Inventeurs:
- **FOIRET, Guilhem Alcide Auguste**
**77550 MOISSY-CRAMAYEL (FR)**
- **JOUDAREFF, Arnaud Bernard Clément Thomas**
**77550 MOISSY-CRAMAYEL (FR)**

(74) Mandataire: **Regimbeau**
**20, rue de Chazelles**
**75847 Paris Cedex 17 (FR)**

(56) Documents cités:
**FR-A1- 2 956 380**
**FR-A1- 2 960 906**
**FR-A1- 2 965 698**
**US-A- 4 998 949**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

### DOMAINE DE L'INVENTION

La présente invention se rapporte au domaine général de l'aéronautique.

Elle concerne plus particulièrement le domaine des systèmes de régulation d'alimentation en carburant pour un moteur d'aéronef. Ce moteur est par exemple une turbomachine comme un turboréacteur.

### ETAT DE LA TECHNIQUE

De façon connue, le système de régulation d'un moteur d'aéronef comprend un calculateur électronique principal qui se présente sous la forme d'un boîtier renfermant une ou une pluralité de cartes électroniques chargées d'assurer diverses fonctions.

Dans les moteurs actuels, le système de régulation du moteur est généralement en charge de la commande d'une unité de dosage carburant, correspondant à un bloc hydromécanique nommé plus communément FMU (« Fuel Metering Unit »).

Le bloc hydromécanique communalise plusieurs fonctions. Il assure, par un organe de dosage, le dosage du carburant, c'est-à-dire la traduction de l'information de débit requis au sein du débit total fourni par le système de pompage, qui découle d'un besoin dicté par une unité de contrôle du système de régulation en fonction de la phase de vol, avec la précision relative exigée. Il permet aussi, par un organe de coupure, la coupure du débit de carburant suite à une commande pilote, et la coupure et/ou régulation du débit carburant dans le cas d'urgence d'une survitesse (régime moteur qui dépasse un seuil au-delà duquel les efforts centrifuges sont critiques et risquent de provoquer une rupture de pièces, ce qui nécessite pour la sécurité une coupure du moteur) détectée par un capteur de régime de la partie haute et/ou basse pression du moteur.

Pour une meilleure précision d'opérabilité des systèmes, et surtout pour la flexibilité de commande/paramétrage de l'opérabilité, mais également pour des raisons de gain de masse, de volume, les calculateurs de régulation des moteurs intègrent aujourd'hui certaines fonctions électroniques autrefois remplies par les blocs hydromécaniques, comme notamment la fonction de « protection survitesse » permettant de protéger le moteur dans un cas où le régime moteur outrepasserait le seuil maximal de vitesse prédéfini (survitesse), par la surveillance du régime et la coupure du moteur si une survitesse est détectée.

Cependant, le comportement d'un calculateur moteur (calculateur de régulation, également appelé FADEC pour « Full Authority Digital Engine Control » en anglais, et plus généralement appelé **EEC,** pour « Electronic Engine Controller » en anglais) en cas de surchauffe ou de feu est difficilement prévisible, ce qui amène les motoristes à considérer les pires hypothèses pour la certification des calculateurs (par les autorités de certification des équipements aéronautiques). Ainsi, les contraintes de certification imposent de ne pas subir une simple panne électrique ou électronique pouvant causer un évènement à risque. Par exemple un évènement de survitesse moteur provoqué par une commande erronée d'actionnement de l'organe de dosage (dit en anglais « Fuel Metering Valve » : FMV) du bloc hydromécanique (par exemple l'atteinte de butée maximale mécanique de dosage, normalement protégée par une butée de régulation).

**En** conséquence, dans le contexte d'un mode de fonctionnement dégradé du moteur tel que lors d'un scénario feu, dans lequel l'évènement survitesse est un évènement craint, il faut pouvoir démontrer que la fonction de protection survitesse assurée par les fonctions de détection de survitesse et de coupure du moteur est toujours opérationnelle au moment où la fonction de régulation assurée par le calculateur meurt. Ce scénario est nommé « mort propre » de l'unité de contrôle du système de régulation.

Dans le cas contraire, si l'on considère une « mort non-propre », la fonction de protection survitesse « meurt » donc premièrement, laissant la fonction de régulation seule maîtresse à bord. Le pire scénario serait alors une commande erronée du système de régulation vers un organe régulant le moteur, par exemple une commande de position erronée à un actionneur d'une unité de dosage du carburant qui mettrait l'actionneur dans une position de débit maximum, conduisant à un état de survitesse du moteur dans lequel la fonction de protection survitesse ne pourrait pas accommoder la panne et en conséquence couper le moteur avant qu'il ne s'endommage.

Pour parer à une telle éventualité, diverses solutions sont envisagées dans l'état de la technique.

Une solution consiste à utiliser, pour la fonction de protection survitesse, des composants électroniques résistant à de très hautes températures. Il s'agit ainsi de s'assurer que dans le scénario envisagé ci-dessus, une défaillance d'une carte électronique en charge de la fonction de protection survitesse interviendrait postérieurement à une défaillance d'une carte (du calculateur moteur), responsable de la fonction régulation.

Toutefois, historiquement, de tels composants sont des composants développés en faible quantité, pour des applications aéronautiques militaires très spécifiques. Ils sont de ce fait très coûteux et difficiles à obtenir, et sujets à une obsolescence précoce.

Une solution alternative consiste à installer la fonction de protection survitesse dans un calculateur localisé dans une zone dite « non-feu », autrement dit dans un environnement différent de celui du calculateur de régulation.

Dans le cas notamment de certains moteurs développés par la demanderesse, les fonctions de gestion de la survitesse sont intégrées dans le calculateur moteur. Cette solution impose de résoudre des problématiques de certification du calculateur, en particulier vis-à-vis des évènements de gestion du feu, notamment par des solutions de ségrégation des deux sous-systèmes contenant les organes réalisant les fonctions de régulation et de protection, au sein d'un même boîtier.

Dans une autre solution, comme c'est le cas sur d'autres moteurs développés par la demanderesse, un calculateur indépendant est développé pour l'implémentation des fonctions de protection survitesse en « zone non-feu » et disposé à l'écart du calculateur de régulation (calculateur moteur), qui quant à lui est disposé en zone feu. Cependant, les impacts en termes de masse (boîtier, harnais, supports... supplémentaires) sont jugés importants et se traduisent notamment par une hausse de la consommation spécifique de carburant. Par ailleurs les coûts de développement d'un calculateur électronique d'aéronef sont très importants, une architecture comprenant deux calculateurs développés indépendamment est donc particulièrement onéreuse.

Dans une autre solution altemative, la publication FR2957667A1 de Snecma divulgue un dispositif de détection d'une surchauffe affectant un calculateur moteur tel qu'un FADEC, ayant au moins un capteur de température localisé à l'intérieur du calculateur, et au moins un détecteur de surchauffe localisé à l'extérieur du calculateur au voisinage de celui-ci.

Cette publication ne divulgue pas de stratégie de détection permettant de discriminer une surchauffe non liée à un départ de feu.

D'autre part, la solution de cette publication ne permet pas d'assurer une marge thermique suffisante, considérant l'inertie thermique, pour assurer une « mort propre » du calculateur de régulation.

En conséquence, considérant l'état de la technique actuelle, il n'existe pas de solution très satisfaisante de système de régulation d'alimentation en carburant avec une fonction de protection contre la survitesse pour un moteur d'aéronef, non pénalisante en masse, cout d'installation, et permettant de respecter les contraintes de certification pour l'accommodation d'un mode de fonctionnement dégradé du moteur tel qu'en réponse à un cas d'incendie.

## EXPOSE DE L'INVENTION

L'invention proposée vise notamment à permettre d'implémenter dans un moteur d'aéronef, un système de protection contre la survitesse apte à couper le moteur en cas de détection d'évènement feu ou sur-température, avant la mise en danger de l'électronique dédiée à la régulation ou la protection du moteur.

Pour des exemples d'unités de dosage de l'art antérieur, on pourra avantageusement se référer aux différentes publications suivantes : FR2956380A1, FR2965698A1, US4998949A1, FR2960906A1.

Dans ce but, l'invention propose un aéronef tel que défini par la revendication 1. Avantageusement, l'aéronef comprend également les caractéristiques suivantes :

- le calculateur de contrôle moteur est également configuré pour transmettre un signal de commande de position à l'organe de dosage de l'unité de dosage pour réguler le débit de carburant issu de l'organe de dosage, en fonction de la consigne de débit réceptionnée ;
- l'unité de dosage de carburant comporte également un calculateur de régulation de puissance du moteur configuré pour réceptionner la consigne de débit et élaborer ledit signal de commande à destination de l'organe de dosage pour réguler le débit de carburant issu de l'organe de dosage, en fonction de la consigne de débit réceptionnée ;
- le calculateur de contrôle moteur est configuré pour être alimenté électriquement par un générateur électrique du moteur, et ledit calculateur de contrôle moteur est configuré pour alimenter électriquement le calculateur de régulation de puissance du moteur;
- le calculateur de protection est alimenté électriquement par un réseau d'alimentation électrique desservant des systèmes de bords de l'aéronef.

Avantageusement, l'invention permet de rationaliser l'intégration d'une carte électronique au sein d'une unité de dosage conventionnelle en y ajoutant des fonctionnalités de protection du moteur, permettant en conséquence de faciliter la stratégie de certification du système tout en limitant les coûts et impacts physiques (masse, volume) et en améliorant la performance du moteur (via l'amélioration de la précision de dosage).

## DESCRIPTION DES FIGURES

D'autres caractéristiques, buts et avantages de l'invention ressortiront de la description qui suit, qui est purement illustrative et non limitative, et qui doit être lue en regard des dessins annexés, sur lesquels :

[Fig. 1A]
la figure 1A illustre un système de régulation d'un turboréacteur d'un aéronef selon un premier mode de réalisation de l'invention;
[Fig. 1B]

- la figure 1B illustre de façon plus détaillée un système de régulation d'un turboréacteur d'un aéronef selon le premier mode de réalisation de l'invention

[Fig. 2A]

- la figure 2A illustre un système de régulation d'un turboréacteur d'un aéronef selon un second mode de réalisation de l'invention; et

[Fig. 2B]

- la figure 2B illustre de façon plus détaillée un système de régulation d'un turboréacteur d'un aéronef selon le second mode de réalisation de l'invention.

## DESCRIPTION DETAILLEE DE L'INVENTION

Par le terme calculateur, il est désigné notamment un contrôleur/unité de commande de dispositifs physiques, et comprenant usuellement un processeur, des mémoires, des interfaces d'entrée-sortie. Le calculateur est représenté physiquement par une ou plusieurs cartes électroniques implémentant ses fonctionnalités.

*Premier mode de réalisation*

La figure **1A** illustre un système de régulation et de protection 100 d'un moteur d'aéronef, implémenté par une architecture distribuée, selon un premier mode de réalisation.

Ainsi, le système 100 comprend un calculateur de contrôle moteur 110 qui génère une consigne de débit massique carburant C101, pour assurer la poussée demandée par l'aéronef en temps réel.

Cette consigne C101 est ensuite transmise à une unité électro-hydromécanique de dosage 120 qui réalise le dosage carburant.

La consigne C101 est plus précisément transmise à un calculateur de régulation de puissance 123 de l'unité électro-hydromécanique de dosage 120.

Le calculateur de régulation 123 détermine en fonction de la consigne de débit C101, une consigne théorique de position Cth d'un organe de dosage carburant 125 (par exemple de type FMV) de l'unité électro-hydromécanique de dosage 120.

En fonction de la consigne Cth de déplacement, le calculateur de régulation 123 transmet une consigne de commande électrique C102 à une servovalve 121 (par exemple de type EHSV pour « Electro Hydraulic Servo Valve » en anglais) de l'organe de dosage carburant 125. La servovalve 121 génère en correspondance avec la consigne de commande C102, une commande de puissance hydraulique C103 à destination d'un actionneur hydraulique 122 permettant de déplacer un élément obturateur (tel qu'un tiroir) de l'organe de dosage carburant 125. En fonction de ladite commande, l'actionneur hydraulique 122 réalise le dosage en carburant, par exemple par le déplacement d'un tiroir doseur mobile.

L'organe de dosage 125 est associé à un capteur de position de l'élément obturateur (par exemple la position du tiroir doseur, donnant une section de passage fluide) qui transmet les informations mesurées par ledit capteur au calculateur de régulation 123 (flèche C104). Le capteur de position peut être de type LVDT (pour « Linear Variation Displacement Transducer » en anglais).

Le débit carburant est ensuite régulé par le calculateur de régulation 123 à l'aide d'un réseau correcteur (traditionnellement de type PID: Proportionnel - Intégral - Dérivé) permettant d'annuler la différence entre la consigne Cth théorique de position et la position mesurée de l'élément obturateur.

Le débit carburant peut-être obtenu selon la formule suivante : $Q = K \times S \times \sqrt{\rho \times \Delta P}$ , avec Q correspondant au débit volumique, K une constante, S une section de passage fluide - fonction de la position de l'élément obturateur, $\rho$ la masse volumique du carburant et $\Delta P$ correspondant à la pression différentielle.

Les fonctions de régulations sont donc directement assurées par l'unité électro-hydromécanique de dosage 120.

Le système de régulation et de protection 100 peut également comprendre un débitmètre 127 comme décrit dans la demande FR3053396A1 de Snecma. Par débitmètre, il est fait référence à tout appareil de mesure permettant de connaître un débit massique de fluide, en l'occurrence un débit de carburant liquide ici.

Le débitmètre permet de mesurer le débit massique de carburant sortant de l'unité électro-hydromécanique de dosage 120. Cette mesure est ensuite communiquée au calculateur de régulation 123 pour calculer la densité du carburant et déterminer par un autre biais que la position du système de dosage, un débit reconstruit.

**En** effet, il est possible d'observer des différences importantes entre le débit effectif et le débit de consigne. Ce débit ainsi reconstruit présente une précision améliorée par rapport aux débits reconstruits correspondant à un débit théorique traversant la valve de dosage. Avantageusement, il est possible d'améliorer la précision du dosage par la génération d'une consigne de débit, utilisant le débit reconstruit déterminé.

La figure **1B** illustre de façon plus détaillée le système de régulation et de protection 100 selon le premier mode de réalisation.

L'architecture telle que présentée sépare les fonctions liées au dosage de celles liées à la protection et la coupure du moteur.

Comme vu précédemment, l'unité électro-hydromécanique de dosage 120 comporte le calculateur de régulation 123 qui interagit (flèche C102) avec un organe de dosage 125, en se chargeant de piloter des actionneurs dudit organe, liés au dosage du carburant issu de la partie amont 130 d'un système d'alimentation en carburant (flèche F101). Pour cela, le calculateur de régulation 123 est configuré pour l'acquisition des mesures et des caractéristiques (des capteurs et actionneurs pertinents) comme illustré par la flèche C104.

Le système 100 comprend également un calculateur de protection et de coupure 124. Ce dernier interagit avec un organe de coupure 126, en se chargeant de piloter les actionneurs dudit organe (flèche C105), liés à la coupure du carburant, par exemple une servovalve de commande d'une vanne de pressurisation du système carburant et de coupure HPSOV (« High Pressure Shut Off Valve » en anglais).

Le carburant dosé issu de l'organe de dosage 125 peut par la suite transiter par l'organe de coupure 126 (flèche F102) avant de rejoindre la partie aval 135 du système d'alimentation en carburant (flèche F103).

Le calculateur de protection et de coupure 124 intègre aussi l'ensemble des fonctions liées à la gestion de la survitesse, en particulier:

- l'acquisition des régimes des corps haute pression et basse pression du moteur (turboréacteur à double corps) par un ou plusieurs capteurs 145 (flèche C106);
- la comparaison des régimes moteurs acquis avec des régimes moteurs seuils prédéfinis ;
- la détection d'un état « survitesse » du corps haute pression ou basse pression si les régimes moteurs sont supérieurs aux valeurs seuils ;et
- la transmission d'un signal de commande à un organe de commande de coupure contenu dans l'organe de coupure 126 en carburant pour sortir de l'état de survitesse comme illustré par la flèche C105; ladite commande entrainant l'actionnement lié à l'accommodation (généralement la coupure du débit carburant).

D'autres fonctions de protection peuvent être intégrées dans l'unité électronique de dosage 120 : la protection feu, la protection contre la surpoussée, la protection contre la perte de contrôle de la poussée, etc.

L'unité électronique de dosage 120 dialogue principalement avec le calculateur de contrôle moteur 110, ladite unité 120 peut être aussi en interface avec l'aéronef (qui peut émettre un ordre de coupure moteur) et/ou un organe de gestion de la maintenance (qui peut être au niveau de l'aéronef ou du moteur).

Avantageusement, le calculateur de contrôle moteur 110 est alimenté par un générateur 150 (flèche A101), par exemple de type générateur à aimants permanents (PMA, PMG ...) du moteur. Le calculateur 110 lui-même alimente le calculateur de régulation 123 (flèche A102).

Le calculateur de protection et de coupure 124 est lui alimenté (flèche A103) par le même réseau d'alimentation 140 que celui desservant les différents systèmes de bords (générateur électrique, groupe auxiliaire de puissance).

Ainsi, un problème d'alimentation par le moteur n'entraine pas de rupture d'alimentation au niveau des fonctions de protection et de coupure simultanément.

Le calculateur de régulation 123 et le calculateur de protection et de coupure 124 peuvent être positionnés dans deux cartes électroniques différentes. Ils peuvent être également positionnés sur la même carte électronique. Cependant, dans ce dernier cas, il existe une frontière mécanique entre ces deux calculateurs.

Ainsi, ces derniers sont ségrégués mutuellement (fonctionnellement et physiquement) pour respecter les exigences de la base de certification CS-E. Cela permet de garantir que les deux calculateurs ne peuvent pas se corrompre mutuellement et risquer de créer un évènement dangereux comme une survitesse non contrôlée.

Dans ce premier mode de réalisation, le calculateur de protection et de coupure 124 est contenu dans l'unité électronique de dosage de carburant 120, et est donc localisé dans une « zone feu », car par définition entouré de carburant.

Seuls les compartiments qui contiennent des sources d'inflammation et le risque de fuite de liquide inflammable sont classés comme zone feu, i.e. comportant des sources d'inflammation potentielles en cas de défaillance pouvant entraîner une température supérieure à la température d'auto-inflammation des fluides éventuellement présents dans le compartiment. Par opposition, une zone non-feu est une zone n'étant pas dans la configuration définissant la zone feu.

**En** conséquence, le système de régulation et de protection 100 comprend des fonctions/moyens permettant la détection de l'évènement feu, par exemple des capteurs de température disposés à l'extérieur ou l'intérieur d'un boitier de l'unité électronique de dosage 120.

*<u>Second mode de réalisation</u>*

La figure 1B illustre un sous-système 200 de contrôle du système de régulation et de protection 100 selon un second mode de réalisation.

Dans l'unité électronique de dosage carburant 120 sont localisés la servovalve hydraulique 121 et l'actionneur 122 (FMV), ainsi que son capteur de position.

Cependant, à la différence du premier mode de réalisation, certaines des fonctions liées au dosage carburant sont implémentées dans le calculateur de contrôle moteur 110 : la génération de la consigne de débit, le réseau correcteur, la génération de la commande de position, ainsi que l'acquisition d'au moins un capteur de position qui renseigne la position du tiroir mobile de la FMV.

Comme dans le premier mode de réalisation, le système de régulation et de protection 100 peut également comprendre un débitmètre comme décrit dans le premier mode de réalisation. Le débitmètre permet de mesurer le débit massique de carburant sortant de l'unité électro-hydromécanique de dosage 120. A la différence du premier mode de réalisation, cette mesure est ensuite communiquée au calculateur de contrôle moteur 110 pour calculer la densité du carburant et déterminer un débit reconstruit.

La figure 2B illustre de façon plus détaillée le système de régulation et de protection 100 selon le second mode de réalisation.

Comme dans le premier mode de réalisation, l'unité électronique de dosage 120 intègre les fonctions liées à la gestion de la survitesse, elles sont de préférence intégralement localisées dans le calculateur de protection et de coupure 124, en particulier :

- l'acquisition des régimes par le calculateur de protection et de coupure 124;
- la comparaison des régimes moteurs acquis avec des régimes moteurs seuils prédéfinis par le calculateur de protection et de coupure 124;
- la détection d'un état « survitesse » du corps haute pression ou basse pression si les régimes moteurs sont supérieurs aux valeurs seuils par le calculateur de protection et de coupure 124; et
- la transmission d'un signal de commande à un organe de commande de coupure contenu dans l'organe de coupure 126 par le calculateur de protection et de coupure 124, ladite commande entrainant l'actionnement lié à l'accommodation (généralement la coupure du débit carburant) par le calculateur de protection et de coupure 124.

D'autres fonctions de protection peuvent être intégrées dans l'unité électronique de dosage 120 : la protection feu, la protection contre la surpoussée, la protection contre la perte de contrôle de la poussée, etc.

Ainsi, l'architecture de l'unité électronique de dosage 120 dans ce second mode de réalisation est identique dans le découpage des fonctions dans les calculateurs 123 et 124, si ce n'est que le calculateur de régulation 123 intègre moins de fonctionnalités que le calculateur de régulation 123 implémenté dans le premier mode de réalisation.

Dans ce second mode de réalisation, plusieurs contextes d'installation des calculateurs de contrôle 110 et unité électronique de dosage 120 sont possibles :

- Dans un exemple qui ne fait pas partie de l'invention, le calculateur de contrôle moteur 110 est installé dans une zone déclarée « non-feu ». Dans ce contexte, la gestion de l'évènement feu (ou des autres « local events » définis dans la norme de certification) est aisée grâce à la ségrégation physique des fonctions de protection et de contrôle. En cas de feu dans la zone de l'unité de dosage de carburant 120, le calculateur de protection et de coupure 124 risque de « mourir » mais il ne pourra jamais déclencher d'évènement survitesse (il n'agit que sur l'organe de coupure). Au pire, le moteur ne pourra pas dans le laps de temps considéré être protégé contre un évènement survitesse. Au bout des 5 minutes règlementaires, le moteur pourra être coupé par les pilotes de l'aéronef via la vanne de coupure carburant de l'aéronef, ou via la HPSOV moteur si un lien direct avec l'aéronef existe.
- Selon l'invention, l'unité électronique de dosage 120 est installée dans une zone feu différente de celle du calculateur de contrôle moteur 110. La gestion de l'évènement feu (ou des autres « local events » définis dans la CS-E) est aisée grâce à la ségrégation physique des fonctions de protection et de contrôle :
    - ◦ En cas de feu dans la zone de l'unité électronique de dosage 120, le calculateur de protection et de coupure 124 risque de « mourir », mais il ne pourra jamais déclencher d'évènement survitesse (il n'agit que sur l'organe de coupure). Au bout des 5 minutes règlementaires, le moteur pourra être coupé par les pilotes via la vanne de coupure carburant de l'aéronef, ou via la HPSOV moteur si un lien direct avec l'aéronef existe.
    - ◦ En cas de feu dans la zone du calculateur de contrôle moteur 110, il se peut que ledit calculateur subisse une « mort non-propre » (erratique) qui pourrait générer une survitesse moteur, par exemple en commandant la FMV en pleine ouverture. Néanmoins, la ségrégation des zones permet par définition de garantir que le feu ne pourra pas l'unité électronique de dosage 120 également. Les fonctions de protection ne seront donc pas affectées et le calculateur de protection et de coupure 124 de l'unité de dosage 120 coupera le moteur en cas de survitesse.
- Dans un exemple qui ne fait pas partie de l'invention, l'unité électronique de dosage 120 est installée dans la même zone (feu) que le calculateur de contrôle moteur 110. Comme pour le premier mode de réalisation, les fonctions de contrôle (dosage carburant) et de protection étant localisées dans la même zone feu, le système de régulation et de protection 100 comprend des fonctions/moyens permettant la détection de l'évènement feu par exemple des capteurs de température disposés à l'extérieur ou l'intérieur du boitier de l'unité de dosage 120.

L'unité électronique de dosage 120 décrite permet donc de rationaliser l'intégration d'une carte électronique sur une unité de dosage conventionnelle en y ajoutant des fonctionnalités de protection du moteur. Ce choix permet de limiter les surcoûts liés à l'intégration d'une carte électronique sur une unité de dosage, car ces fonctions de protection devront être intégrées quoiqu'il arrive (soit au calculateur de contrôle moteur principal, soit dans un calculateur spécifique indépendant) et occasionner des coûts non récurrents importants.

De plus, l'intégration de la protection dans une unité de dosage électronique permet de limiter les impacts physiques (masse, volume) sur l'architecture globale du moteur (en comparaison d'un calculateur de protection déporté possédant son boitier spécifique). **En** effet la réduction / limitation des interfaces induites par le regroupement constitue un gain important.

**En** outre, les architectures proposées permettent de faciliter la stratégie de certification du système (en particulier vis-à-vis des évènements locaux, comme le feu), en comparaison d'une protection intégrée au calculateur de contrôle moteur principal.

**En** conséquence, l'invention décrite permet de faciliter la stratégie de certification du système tout en limitant les coûts et impacts physiques (masse, volume) et en améliorant la performance du moteur (via l'amélioration de la précision de dosage).

## Revendications

1. Aéronef, comprenant :

   une première zone feu et une deuxième zone feu distincte de la première zone feu,
   correspondant à des zones de l'aéronef qui contiennent des sources d'inflammation et le risque de fuite de liquide inflammable, et
   un système de régulation et de protection (100) d'alimentation en carburant pour un moteur d'aéronef, comprenant
   un calculateur de contrôle moteur (110) générant une consigne de débit massique de carburant ; et
   une unité de dosage (120) de carburant pour le moteur d'aéronef, comprenant un organe de dosage (125) configuré pour réceptionner un signal de commande et pour doser l'alimentation en carburant du moteur en fonction de ladite commande ;
   un organe de coupure (126) configuré pour couper l'alimentation en carburant du moteur; où l'unité de dosage de carburant (120) comprend en outre un calculateur de protection et de coupure (124) du moteur, configuré pour :

      réceptionner des données permettant d'évaluer la valeur instantanée du régime moteur ;
      comparer la valeur instantanée du régime moteur à une valeur seuil prédéfinie de régime moteur et déterminer un éventuel état de survitesse sur la base de cette comparaison ; et
      transmettre un signal de commande à un organe de commande de coupure contenu dans l'organe de coupure (126) pour couper l'alimentation en carburant du moteur si un état de survitesse du régime moteur est déterminé,
      et **caractérisé en ce que** l'unité de dosage (120) est installée dans la première zone feu de l'aéronef, et le calculateur (110) de contrôle moteur est installé dans la deuxième zone feu.

2. Aéronef selon la revendication précédente, dans lequel le calculateur de contrôle moteur (110) est également configuré pour transmettre un signal de commande de position à l'organe de dosage (125) de l'unité de dosage (120) pour réguler le débit de carburant issu de l'organe de dosage, en fonction de la consigne de débit réceptionnée.

3. Aéronef selon la revendication 2, dans lequel l'unité de dosage (120) comporte également un calculateur de régulation de puissance (123) du moteur configuré pour réceptionner la consigne de débit et élaborer ledit signal de commande à destination de l'organe de dosage (125) pour réguler le débit de carburant issu de l'organe de dosage, en fonction de la consigne de débit réceptionnée.

4. Aéronef selon la revendication précédente dans lequel le calculateur de contrôle moteur (110) est configuré pour être alimenté électriquement par un générateur électrique du moteur, et ledit calculateur de contrôle moteur (110) est configuré pour alimenter électriquement le calculateur de régulation de puissance (123) du moteur.

5. Aéronef selon l'une quelconque des revendications 1 à 4 dans lequel le calculateur de protection et de coupure (124) est alimenté électriquement par un réseau d'alimentation électrique desservant des systèmes de bords de l'aéronef.

## Patentansprüche

1. Flugzeug, umfassend:

   einen ersten Feuerbereich und einen zweiten Feuerbereich, der vom ersten Feuerbereich verschieden ist, die Bereichen des Flugzeugs entsprechen, die Zündquellen und die Gefahr des Austretens einer entzündlichen Flüssigkeit enthalten, und
   ein Treibstoffversorgungs-Regelungs- und Schutzsystem (100) für ein Flugzeugtriebwerk, umfassend
   einen Triebwerkssteuerrechner (110), der einen Sollwert für den Treibstoffmassendurchsatz erzeugt; und
   eine Treibstoffdosiereinheit (120) für das Flugzeugtriebwerk, umfassend
   ein Dosierorgan (125), das ausgelegt ist, um ein Steuersignal zu empfangen und um die Versorgung mit Treibstoff des Triebwerks in Abhängigkeit von der Steuerung zu dosieren;
   ein Abschaltorgan (126), das ausgelegt ist, um die Versorgung des Triebwerks mit Treibstoff zu unterbrechen;
   wobei
   die Treibstoffdosiereinheit (120) ferner einen Schutz- und Abschaltrechner (124) für das Triebwerk umfasst, der ausgelegt ist, um:

Daten zu empfangen, die gestatten, den Momentanwert der Triebwerksdrehzahl zu ermitteln;

den Momentanwert der Triebwerkdrehzahl mit einem vorgegebenen Triebwerksdrehzahl-Schwellenwert zu vergleichen und einen eventuellen Überdrehzustand auf der Basis dieses Vergleichs zu bestimmen, und ein Steuersignal an ein Abschaltsteuerelement zu übermitteln, das in dem Abschaltorgan (126) vorhanden ist, um die Versorgung des Triebwerks mit Treibstoff zu unterbrechen, wenn eine Überdrehzustand der Triebwerkdrehzahl ermittelt wird,

und **dadurch gekennzeichnet, dass** die Dosiereinheit (120) im ersten Feuerbereich des Flugzeugs eingerichtet ist und der Triebwerkssteuerrechner (110) im zweiten Feuerbereich eingerichtet ist.

**2.** Flugzeug nach vorhergehendem Anspruch, wobei der Triebwerkssteuerrechner (110) ebenfalls ausgelegt ist, um ein Positionssteuersignal an das Dosierorgan (125) der Dosiereinheit (120) zu übermitteln, um den Treibstoffdurchsatz aus dem Dosierorgan in Abhängigkeit von dem empfangenen Durchsatzsollwert zu regeln.

**3.** Flugzeug nach Anspruch 2, wobei die Dosiereinheit (120) ebenfalls einen Rechner zur Regelung der Triebwerksleistung (123) umfasst, der ausgelegt ist, um den Durchsatzsollwert zu empfangen und das Steuersignal an das Dosierorgan (125) auszugeben, um den Treibstoffdurchsatz aus dem Dosierorgan in Abhängigkeit von dem empfangenen Durchsatzsollwert zu regeln.

**4.** Flugzeug nach vorhergehendem Anspruch, wobei der Triebwerkssteuerrechner (110) ausgelegt ist, um von einem elektrischen Generator des Triebwerks mit Strom versorgt zu werden, und der Triebwerkssteuerrechner (110) ausgelegt ist, um den Rechner zur Regelung der Triebwerksleistung (123) mit Strom zu versorgen.

**5.** Flugzeug nach einem der Ansprüche 1 bis **4,** wobei der Schutz- und Abschaltrechner (124) von einem Stromversorgungsnetz elektrisch versorgt wird, das Bordsysteme des Flugzeugs versorgt.

## Claims

**1.** Aircraft, comprising :

a first fire zone and a second fire zone distinct from the first fire zone, corresponding to zones of the aircraft that contain sources of ignition and the risk of a flammable liquid leak, and

a fuel supply regulation and protection system (100) for an aircraft engine, comprising an engine control computer (110) generating a fuel mass flowrate setpoint;

a fuel metering unit (120) for the aircraft engine, comprising

a metering member (125) configured to receive a command signal and to meter the fuel supply to the engine as a function of said command ;

a shut-off member (126) configured to shut off the fuel supply to the engine

wherein the fuel metering unit (120) further comprises an engine protection and shut-off computer (124) configured to :

receive data for evaluating the instantaneous value of the engine speed ;

compare the instantaneous engine speed value with a predefined engine speed threshold value and determine a potential overspeed condition on the basis of this comparison;

transmitting a control signal to a shut-off control member contained in the shut-off member (126) to shut off fuel supply to the engine if an engine overspeed condition is determined, and **characterised in that** the fuel metering unit (120) is installed in the first fire zone of the aircraft, and the engine control computer (110) is installed in the second fire zone.

**2.** Aircraft according to the preceding claim, wherein the engine control computer (110) is also configured to transmit a position command signal to the metering member (125) of the fuel metering unit (120) in order to regulate the flow of fuel from the metering member, as a function of the flowrate setpoint received.

**3.** Aircraft according to claim 2, wherein the fuel metering unit (120) also comprises an engine power regulation computer (123) configured to receive the flowrate setpoint and to generate the control signal for the metering member (125) in order to regulate the flow rate of fuel from the metering member, as a function of the flowrate setpoint received.

**4.** Aircraft according to the preceding claim, wherein the engine control computer (110) is configured to be supplied electrically by an electrical generator of the engine, and the engine control computer (110) is configured to supply electrically the power regulation computer (123) of the engine.

**5.** Aircraft according to any one of claims 1 to 4 in which the protection and shut-off computer (124) is supplied electrically by an electrical supply network serving on-board systems of the aircraft.

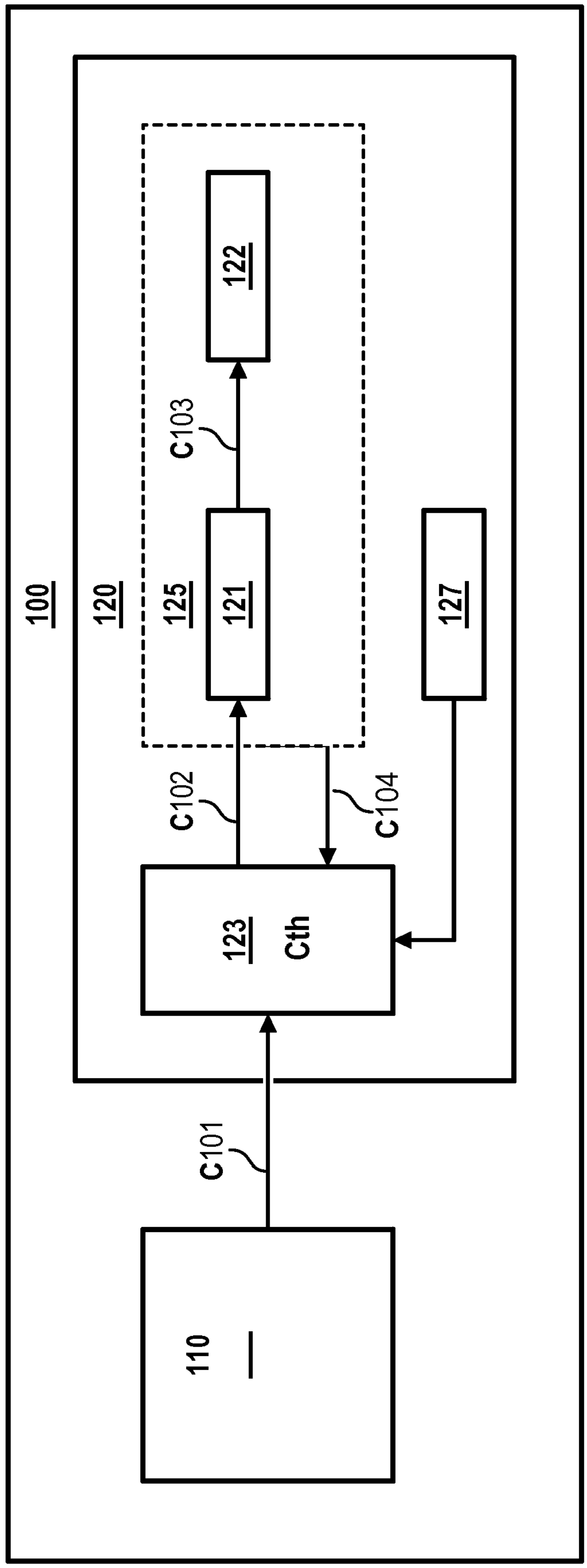


FIG. 1A

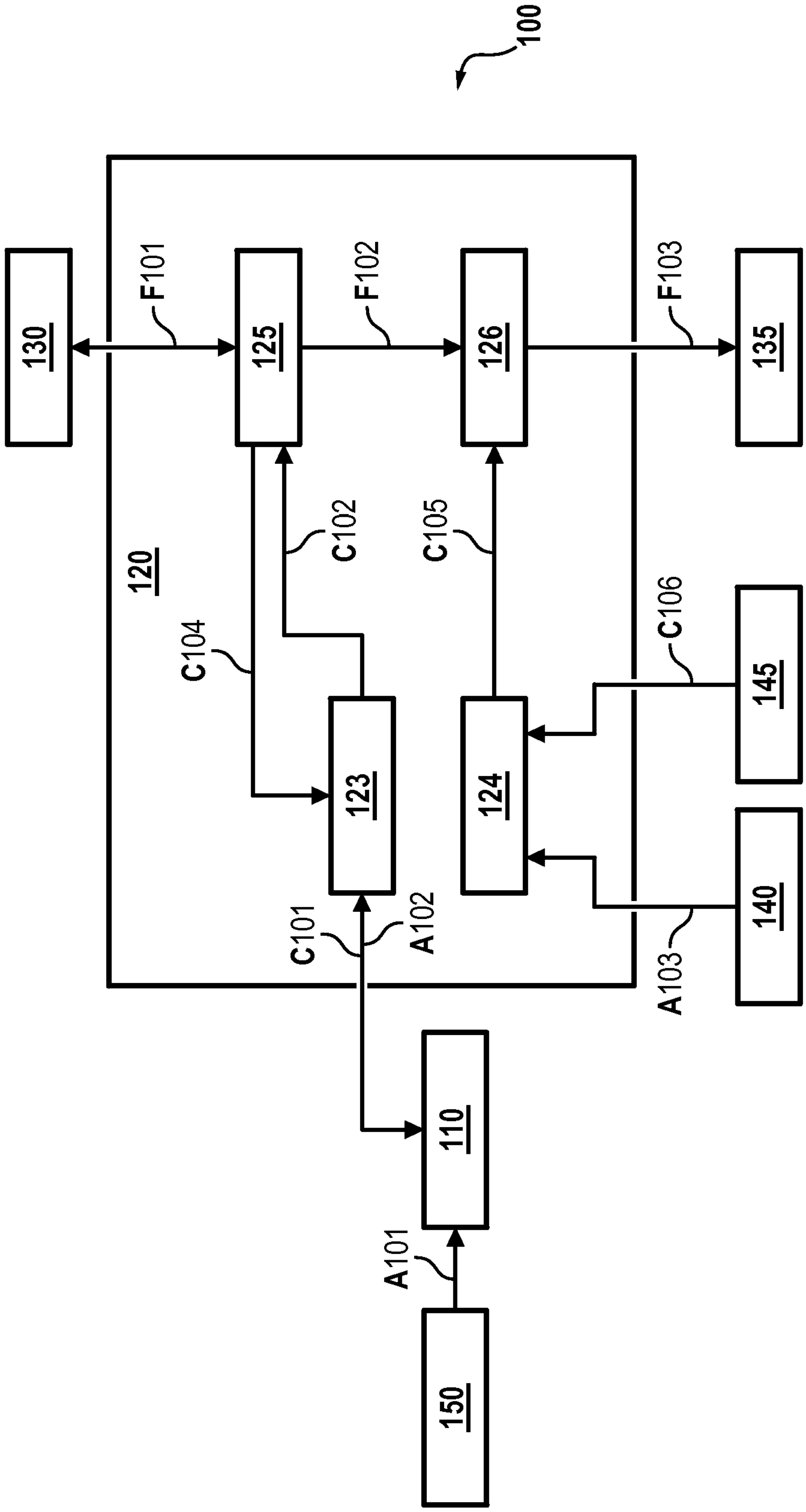
100
120
130
F101
125
F102
126
F103
135
C102
C104
123
C101
A102
C105
124
C106
145
140
A103
110
A101
150

FIG. 1B

FIG. 2A

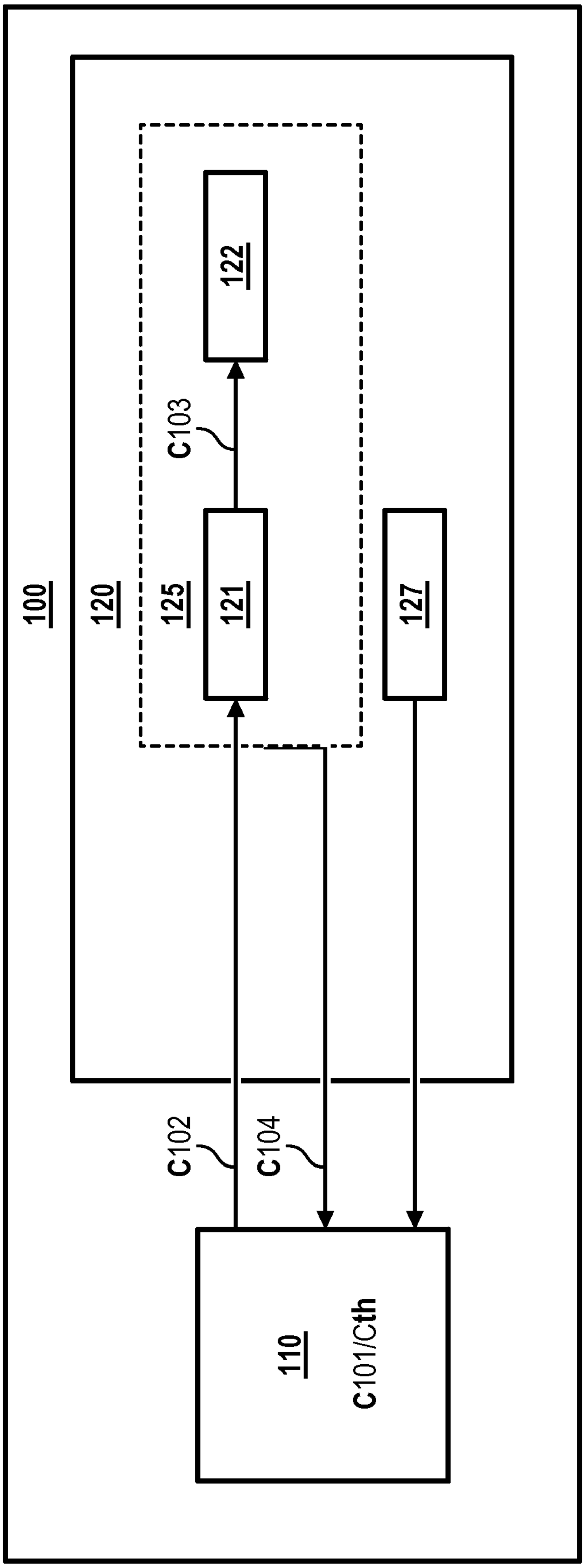

FIG. 2B

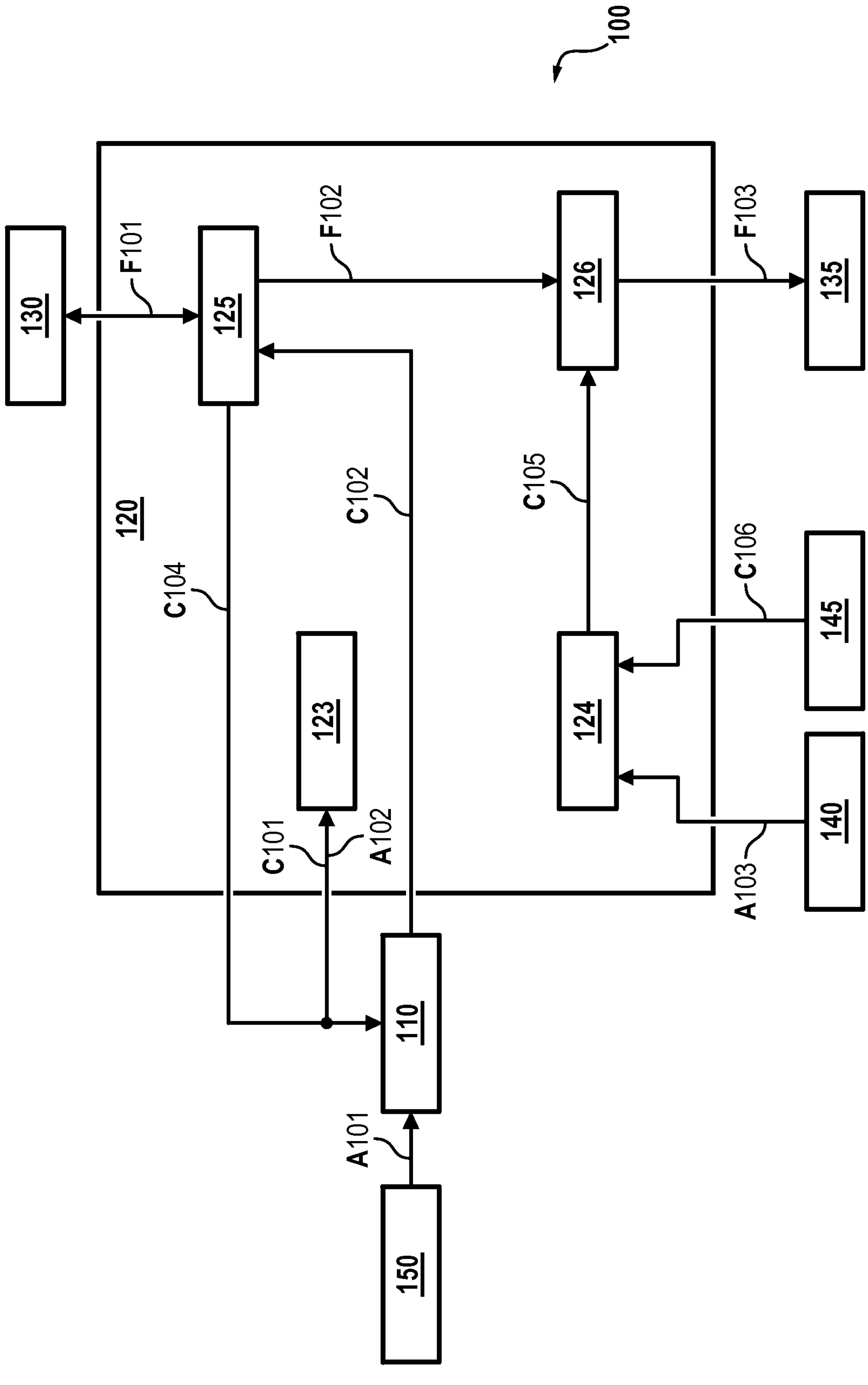
100
120
110
123
124
125
126
130
135
140
145
150
A101
A102
A103
C101
C102
C104
C105
C106
F101
F102
F103

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2957667 A1
- FR 2956380 A1
- FR 2965698 A1
- US 4998949 A1
- FR 2960906 A1
- FR 3053396 A1